Europäisches Patentamt

European Patent Office

Office européen des brevets

(19)

(11) Veröffentlichungsnummer : **0 347 529 B1**

# EUROPÄISCHE PATENTSCHRIFT

(12)

(45) Veröffentlichungstag der Patentschrift :
**14.06.95 Patentblatt 95/24**

(51) Int. Cl.⁶ : **H01J 61/82, H01J 61/22, H05B 41/30**

(21) Anmeldenummer : **89105240.9**

(22) Anmeldetag : **23.03.89**

(54) **Verfahren zum Betreiben einer Natriumdampf-Hochdrucklampe.**

(30) Priorität : **25.03.88 DD 3140295**

(43) Veröffentlichungstag der Anmeldung :
**27.12.89 Patentblatt 89/52**

(45) Bekanntmachung des Hinweises auf die Patenterteilung :
**14.06.95 Patentblatt 95/24**

(84) Benannte Vertragsstaaten :
**BE DE FR GB NL**

(56) Entgegenhaltungen :
**DE-A- 2 707 203
DE-A- 2 729 052
GB-A- 1 143 452
GB-A- 2 133 925
JOURNAL OF THE ILLUMINATING ENGINEE-
RING SOCIETY, vol. 16, 1987, pages 50-66,
New York, US; N. BRATES et al.: "Pulsed
operation of a high pressure sodium lamp"**

(73) Patentinhaber : **PRIAMOS Licht, Industrie &
Dienstleistungs GmbH
Ehrenbergstrasse 11-14
D-10245 Berlin (DE)**

(72) Erfinder : **Gottschling, Wolfgang
Hans-Beimler-Strasse 86
DDR-1017 Berlin (DD)**
Erfinder : **Günther, Klaus
Amalienpark 3
DDR-1100 Berlin (DD)**
Erfinder : **Kloss, Hans-Georg
Eichenallee 24
DDR-1406 Hohen-Neuendorf (DD)**
Erfinder : **Radtke, Rainer
Pestalozzistrasse
DDR-1100 Berlin (DD)**
Erfinder : **Serick, Felix
Königswinterstrasse 3
DDR-1272 Neuenhagen (DD)**

(74) Vertreter : **Ritter und Edler von Fischern,
Bernhard,Dipl.-Ing. et al
Hoffmann, Eitle & Partner,
Patentanwälte,
Postfach 81 04 20
D-81904 München (DE)**

EP 0 347 529 B1

## Beschreibung

Die vorliegende Erfindung betrifft ein Verfahren zum Betreiben einer Natriumdampf-Hochdrucklampe mit Natrium oder Natriumamalgam mit einem Natriummolenbruch XNa > 0,90 als Hauptentladungsmedium unter Verwendung einer Impulsfolgefrequenz von mindestens 100 Hz.

Solch ein Verfahren und eine betreffende Natriumdampf-Hochdrucklampe sind aus IEE Proc., Vol. 128 (1981), Pt. A, Nr. 6, Seiten 415-441 von J.A.J.M. van Vliet et al.: "High-pressure sodium discharge lamps" bekannt.

Eine Natriumdampf-Hochdrucklampe mit erhöhter Farbtemperatur, hoher Lichtausbeute und verbesserten Farbwiedergabeeigenschaften, die für allgemeine Beleuchtungszwecke, wie z. B. zur Straßen-, Objekt- oder Innenraumbeleuchtung, eingesetzt werden kann, ist wünschenswert.

Kennzeichnend für die spektrale Strahlungsverteilung konventioneller Natriumdampf-Hochdrucklampen ist die konzentrierte Abstrahlung im Bereich der stark verbreiterten und selbstumgekehrten Hauptresonanzlinien. Da dieser Spektralbereich in der Nähe des Maximums der Augenempfindlichkeit liegt, weisen derartige Lampen sehr hohe Lichtausbeuten auf, für die in Abhängigkeit von der elektrischen Leistung Werte zwischen 75 lm/W für 35-W-Lampen und 150 lm/W für 1000-W-Lampen angegeben werden. Bedauerlicherweise sind die Farbtemperatur ($T_c$) mit ca. 2000 K und der allgemeine Farbwiedergabeindex ($R_a$) mit ca. 20 verhältnismäßig niedrig, so daß solche Lampen für anspruchsvollere Beleuchtungsaufgaben ausscheiden.

Es hat in der Vergangenheit zahlreiche Versuche gegeben, die Farbwiedergabeeigenschaften von Natriumdampf-Hochdrucklampen durch konstruktive Maßnahmen oder durch ein verändertes Betriebsregime zu verbessern. Ein Teil der Bemühungen geht dahin, im Brenner die Temperatur der kältesten Stelle anzuheben, um so bei höherem Natriumpartialdruck eine für die Farbqualität günstigere spektrale Verteilung zu erhalten. Die erreichten Verbesserungen - es werden $R_a$-Werte bis 80 und Farbtemperaturen bis 2500 K angegeben - sind jedoch mit einer Verringerung der Lichtausbeute um bis zu 40 und einer z. T. drastischen Reduzierung der Lebensdauer verbunden (vgl. z. B. J.A.J.M. van Vliet, J.J. de Groot; High-pressure sodium discharge lamps, IEE Proc. 128 (1981) 415). Auch die Verwendung von Rot absorbierenden Filtergläsern (DE 2 711 733) behebt die oben genannten Mangel nur teilweise, da die erreichte Anhebung der Farbtemperatur mit großen Lichtausbeuteverlusten verbunden ist.

Andere Versuche, die im Blau-Grün-Bereich konventioneller Natriumdampf-Hochdrucklampen fehlenden Strahlungsanteile durch Erweiterung des Leuchtsystems zu ergänzen, sind in älteren Patentschriften beschrieben worden (US-PS 3 521 108, GB-PS 1 192 094, GB-PS 1 280 370). Hierbei sind Zusätze von Thallium, Kadmium, Zink oder Blei bzw. Kombinationen aus diesen Elementen vorgeschlagen worden, ohne daß diese Bemühungen jedoch zu einer kommerziell verwertbaren Lampe geführt haben. Die Ursachen hierfür sind u. a. in den für solche Lampen typischen Plasmatemperaturen zu sehen, die mit Achsenwerten von ca. 4000 K nur sehr ungünstige Anregungsbedingungen für energetisch höher gelegene Strahlungsprozesse bieten. Gelegentlich werden auch Natriumdampf-Hochdrucklampen mit Kadmiumzusätzen beschrieben (DE 2 032 615), in denen dieses Element als Puffersubstanz fungiert und zur Stabilisierung der Lampenparameter beitragen soll. Zusätze von Kadmium, Thallium, Zink, Blei, Zinn und Wismut sind vorgeschlagen worden (DE 2 707 203), um im Interesse geringer Umweltschädlichkeit und besserer Luftbeständigkeit der Füllsubstanzen den Quecksilberanteil in den Natriumdampf-Hochdrucklampen zu verringern.

Eine weitere Möglichkeit, die geeignet ist, die Farbeigenschaften von Natriumdampf-Hochdrucklampen gezielt zu beeinflussen, besteht in einer vom Betrieb mit Netzfrequenz abweichenden, zeitlich modulierten Energieeinspeisung. Hierbei wird der Lampe die Energie in Form von Impulsen zugeführt, wobei die Durchschnittsleistung und damit die Temperatur des Entladungsgefäßes nicht erhöht werden, obwohl die Stromstärke im Impuls deutlich über den sonst üblichen Werten liegt. Die durch die Impulse eingespeiste, gesamtzeitlich gemittelte Lampenleistung ($\overline{N}$) und die während der Impulse umgesetzte Leistung ($\hat{N}$) sind über das Tastverhältnis ($\tau$) gemäß $\overline{N} = \tau \cdot \hat{N}$ miteinander verknüpft, wenn die Leistung in den Impulspausen Null ist, wobei sich aus dem Produkt von Impulslänge (t) und Impulsfolgefrequenz (f) ergibt: $\tau = f \cdot t$.

Eine nach diesem Verfahren betriebene Natriumdampf-Hochdruck lampe ist in der Patentliteratur beschrieben worden (US-PS 4 137 484, DE 2 657 824), wobei f zwischen 500 und 2000 Hz und $\tau$ zwischen 0,1 und 0,3 variiert wurde. Auf diese Weise konnte durch Anregung entsprechend höher gelegener elektronischer Niveaus des Natriums und des üblicherweise als Puffergas wirkenden Quecksilbers die Farbtemperatur auf 2300 bis 2600 K angehoben werden. Für einen Einsatz solcher Lichtquellen bei der Innenraumbeleuchtung, insbesondere im Wohnbereich, sind diese Werte allerdings immer noch zu niedrig, da hier Farbtemperaturen von 3000 K und mehr wünschenswert sind. Darüber hinaus zeigten die Versuche, daß der visuelle Wirkungsgrad derart betriebener Lampen abnimmt, wenn bei vorgegebener Impulsfolgefrequenz ein gewisser Wert für das Tastverhältnis unterschritten wird. Da eine weitere Steigerung der Farbtemperatur jedoch nur durch eine Verringerung von $\tau$ möglich ist, sind Einbußen bei der Lichtausbeute unvermeidbar, wenn herkömmliche Natriumdampf-Hochdrucklampen mit leistungsstarken Impulsen versorgt werden. Beispielsweise sinkt die Lichtausbeute der in der DE-PS 2 657 824 beschriebenen 150-W-Lampe für Farbtemperaturen oberhalb 2700 K unter den bei Betrieb mit Netzfrequenz erreichbaren Wert (ca. um 5 lm/W für jeweils einen Zuwachs von 120 K in der Farbtemperatur), so daß in diesem Bereich der Impulsbetrieb solcher Lampen ungünstig ist. Zu dem gleichen Schluß gelangen auch andere Autoren (N. Brates, E.F. Wyner: Pulsed Operation of a High Pressure Sodium Lamp; J. Illum. Eng. Soc., New York 16 (1987) 50), die ähnliche Untersuchungen an konventionellen 100-W-Lampen, allerdings für mehr oder weniger zufällig ausgewählte Betriebsbedingungen ($\tau = 0{,}015$, f = 150 Hz) durchgeführt haben. Die Ergebnisse dieser Versuche bestätigen den für das gewählte Tastverhältnis nicht unerwarteten Anstieg in der Farbtemperatur - während des Impulses werden $T_c$-Werte von max. 4300 K erreicht -, zeigen aber bei zeitlicher Mitteilung nur mäßige Verbesserungen der Farbeigenschaften, während die Lichtausbeute zu keinem Zeitpunkt der Entladung die bei konventioneller Betriebsart erzielten Werte erreicht. Daß die zeitlich gemittelten Werte für $T_c$ und $R_a$ im Vergleich zum stationären Fall nur geringfügig verbessert werden konnten, liegt an dem relativ hohen Energieumsatz zwischen den Impulsen, der im vorliegenden Fall ca. 50 % der Gesamteinspeisung ausmachte. Auf diese Weise emittiert das Plasma über relativ lange Zeiten mit geringer Effektivität, so daß der mit der Impulseinspeisung angestrebte Effekt in Frage gestellt ist.

Da die unmittelbare Impulsversorgung z. B. über die Zuschaltung aufgeladener Kondensatoren erfolgt, ergeben sich durch Kondensatorenentladungskurven, Plasmakennlinien, Plasmadynamik und Elektrodeneinflüsse bestimmte zeitliche Leistungsverläufe, die von einer plasmaphysikalischen-lichttechnisch günstigen Form zum Teil erheblich abweichen.

Eine modifizierte Variante der Impulseinspeisung findet sich in den DE-OS 3 636 901 bzw. DE-OS 3 641 070. Hier wird bipolaren Stromimpulsen mit einem Tastverhältnis von 0,2 bis 0,6 ein höherfrequenter Strom von z. B. 20 bis 50 kHz überlagert. Diese Überlagerung soll ohne auf die lichttechnischen Daten direkt Einfluß zu nehmen insbesondere das bei impulsbetriebenen Hochdrucklampen beobachtete Flickern reduzieren. Als Farbtemperatur für 30-Watt-Lampen wird hier bei einem Tastverhältnis von 0,3 ein Wert von 2700 K angegeben.

Ein Betrieb von Natriumdampf-Hochdrucklampen, die neben Natrium noch wenigstens einen anderen Metalldampf enthalten, mit unipolaren Impulsen von 50 bis 23 000 Hz und mit einem Tastverhältnis zwischen 0,08 und 0,8, wurde auch zum Zweck einer Verhinderung von Entmischungserscheinungen durch Kataphorese vorgeschlagen (DE 2 729 052).

Man kann allgemein davon ausgehen, daß die bekannten Maßnahmen zur Verbesserung der Farbeigenschaften von Natriumdampf-Hochdrucklampen zu mehr oder weniger starken Einbußen bei der Lichtausbeute führen. Die Ursachen für dieses Verhalten liegen in einer verstärkten Selbstabsorption der Resonanzlinien, sofern die Farbverbesserung über eine Erhöhung des Natriumpartialdruckes bewirkt wird, oder, wie im Falle der gepulsten Hochdrucklampe, in einer Umverteilung der Energie auf Strahlungsprozesse mit geringem lichttechnischem Wirkungsgrad. Auf der anderen Seite kann aber gerade die spektrale Verteilung und damit die Lichtausbeute durch den technisch realisierten Plasmazustand und durch das verwendete Leuchtsystem optimiert werden. Das im Zusammenhang mit dem Impulsbetrieb von Natriumdampf-Hochdrucklampen in der DE-PS 2 657 824 vorgeschlagene Betriebsregime berücksichtigt diesen Umstand nur zum Teil und führt daher bei höheren Farbtemperaturen zu Lichtausbeuteeinbußen.

Der Erfindung liegt die Aufgabe zugrunde, ein eingangs erwähntes Verfahren zu entwickeln, bei dem es möglich ist, beträchtliche Strahlungsanteile im Bereich des Maximums der Augenempfindlichkeit zu emittieren und das damit eine hohe Lichtausbeute aufweist, wobei die Gesamtstrahlungsverteilung Farbtemperaturen von 3000 bis 4000 K ermöglicht, und das bei hoher Lichtausbeute und hoher Lebensdauer der Lichtquelle gute Farbwiedergabeeigenschaften und eine ähnlichste Farbtemperatur im Bereich von 3000 bis 4000 K besitzt.

Erfindungsgemäß wird diese Aufgabe gelöst durch das eingangs erwähnte Verfahren mit den kennzeichnenden Merkmalen des Anspruchs 1.

Vorteilhafte Weiterbildungen finden sich in den abhängigen Ansprüchen.

Insbesondere wird in einem lichtdurchlässigen Entladungsgefäß eine elektrische Entladung in Natriumdampf betrieben, dem weitere Stoffe, wie z. B. Quecksilber, hinzugefügt sein können, wobei der Natrium-Molenbruch

$$XNa = \frac{1}{1 + \dfrac{23}{200{,}6}\dfrac{m_{Hg}}{m_{Na}}}$$

abweichend von den sonst üblichen Lampenfüllungen > 0,9 ist. In der Beziehung für XNa bedeuten $m_{Hg}$ und $m_{Na}$ die Massen des im Amalgam befindlichen Quecksilbers bzw. Natriums.

Weitere Zusätze sind nicht im Natriummolenbruch enthalten.

Die Entladung wird mit elektrischen Impulsen, deren Leistung den gesamtzeitlichen Mittelwert mindestens um das Fünffache übersteigt, derart gespeist, daß die Durchschnittsleistung und damit die thermische Belastung der Lampe den für den Betrieb mit Netzwechselstrom zulässigen Wert nicht überschreitet. Zur Erzielung der gewünschten Strahlungseigenschaften ist ein Tastverhältnis unterhalb von 0,1 geeignet, wobei die Impulsfolgefrequenz oberhalb der Flimmerverschmelzungsfrequenz des menschlichen Sehapparates liegt. Entmischungen verschiedener Entladungsmedien durch Kataphorese können durch die Verwendung von Impulsen mit alternierender Polarität vorgebeugt werden. Um die notwendige Wiederzündspannung zu Beginn jedes weiteren Impulses zu begrenzen, kann die Entladung zwischen den Impulsen mit einer möglichst niedrigen Grundleistung weiter betrieben werden. Bei dieser Betriebsart ist es vorteilhaft, wenn die Grundleistung durch einen zu den Impulsen polaritätssynchronen Strom realisiert wird.

Für die bereits bekannten getasteten Natriumdampf-Hochdrucklampen sind die erreichten Verbesserungen in den Farbeigenschaften mit einer mehr oder weniger starken Einbuße bei der Lichtausbeute verkoppelt. Überraschenderweise tritt dieser Nachteil bei der erfindungsgemäßen Lampe nicht auf.

Die erfindungsgemäße Kombination von Impulsen mit niedrigem Tastverhältnis und Stoffmischungen mit hohem Natriumanteil führt neben der bekannten Erhöhung der Plasmatemperatur mit einhergehender Anhebung der Emission im kurzwelligen Teil des sichtbaren Spektrums zu einer relativ starken Anregung des Natrium 4d-Niveaus. Da die von diesem Niveau abgestrahlte Spektrallinie 569 nm im Gegensatz zu den Resonanzlinien ohne Selbstumkehr abgestrahlt wird, bewirkt die Wahl eines hohen Natriumpartialdruckes, der natürlich auch auf andere Weise erreicht werden könnte, eine weitere Steigerung der Strahlungsintensität auch im Bereich des Linienzentrums. Die Folge ist ein hoher visueller Wirkungsgrad, weil unter diesen Bedingungen ein erheblicher Anteil der Strahlung nahe dem Maximum der Augenempfindlichkeit emittiert wird. Da durch die Erhöhung des Natriumpartialdruckes auch die Abstrahlung im kurzwelligen Teil des sichtbaren Spektrums verstärkt wird, vereinigt die erfindungsgemäße Lampe hohe Lichtausbeuten mit guten Farbeigenschaften Im Interesse einer hohen Lichtausbeute sollte jedoch das Tastverhältnis nicht kleiner als 0,01 gewählt werden, da andernfalls die Plasmatemperatur zu groß und ein zunehmender Anteil der elektrischen Energie in weniger effektiven Strahlungsprozessen umgewandelt wird.

Für einen optimalen Lampenbetrieb ist es wesentlich, daß bezüglich der Impulsform ein bestimmtes Zeitregime geschaffen wird. Es wird eine Impulsformung vorgeschlagen, die durch drei Phasen gekennzeichnet ist:

1. Schneller Übergang von der Abkühlungspause in den Zustand einer vorgegebenen Pulsleistung.
2. Ausgedehnte Wirkungszeit dieser dann angepaßten Pulsleistung.
3. Schnelle Rückführung in den Zustand der Abkühlungspause.

Dabei wird eine annähernd rechteckige Impulsform verwendet.

Es wurden Entladungslampen mit verschiedenen Stoffüllungen bei Betrieb mit elektrischen Impulsen untersucht. Dabei wurde die auf den Wert bei stationärem Betrieb bezogene Momentanleistung schrittweise auf bis über 100fache Werte gesteigert. Während Farbtemperaturen und Farbwiedergabeindices von Lampen mit Natriumfüllungen zum Teil unter Beteiligung weiterer Zusätze, wie Quecksilber, durchweg angehoben wurden, erreichte die Lichtausbeute bei etwa zehnfacher Leistung ein Maximum, das überraschenderweise um bis zu 60 % über dem stationären Wert liegt. Anschließend erfolgt ein Abfall derart, daß bei etwa 100facher Überlastung die Lichtausbeute im allgemeinen unter den bei stationärem Betrieb erreichten Wert absinkt. Um den lichttechnisch günstigsten Zustand mit möglichst hohem Gewicht in den gesamtzeitlichen Mittelwert einfließen zu lassen und die Gesamtwirkung der ungünstigeren Zustände so klein wie möglich zu halten, ist daher die vorgeschlagene optimierte Pulsformung anzustreben. Aus dem gleichen Grund sollte die Halteleistung möglichst niedrig gehalten werden, da die Lichtausbeute in dieser Phase noch deutlich unter den bei Normalbetrieb üblichen Werten liegt. Da eine elektronische Regelung der Leistung mit aktiven Bauelementen wie Transistoren mit zusätzlichen Wärmeverlusten im Vorschaltgerät verbunden ist, wurden nur Realisierung einer annähernd rechteckigen Impulsform mehrgliedrige Laufzeitketten benutzt, die aus Kondensatoren und Induktivitäten bestehen. Damit ist bei geeigneter Anpassung die Ladespannung der Kondensatoren, die zur Auftastung des Plasmas zur Verfügung steht, etwa doppelt so hoch wie die sich ausbildende Lampenbrennspannung, womit ein schneller Übergang in die zweite Phase erreicht wird. Anschließend kommt es zur Ausbildung eines angepaßten Leistungsplateaus, gefolgt von einem schnellen Abklingen. Die so erreichbare Impulsformung ermöglicht neben lichttechnischen Vorteilen eine Reduzierung der Spitzenstromstärken, womit die Anforderungen an die elektronischen Bauelemente in den Vorschaltgeräten und im Interesse einer hohen Lebensdauer die Belastung der Lampenelektroden reduziert werden.

Die Farbwiedergabeeigenschaften der erfindungsgemäßen Lampe können weiter verbessert werden, indem dem entladungsmedium Caesium und/oder Rubidium hinzugefügt werden. Im Impulsbetrieb emittieren diese Elemente ein starkes Kontinuum, das die Natriumstrahlung auf der kurzwelligen Seite des sichtbaren Spektrums auffüllt.

Weitere Verbesserungen hinsichtlich der ähnlichsten Farbtemperaturen können durch Zusätze von Kadmium und/oder Zink erfolgen. Wegen der durch den Impulsbetrieb der Lampe erhöhten Plasmatemperaturen werden nun auch die sonst schwer anregbaren Spektrallinien 468, 480, 509 und 644 nm des Kadmiums sowie 468, 472 481 und 636 nm des Zinks zur Emission gebracht. Sie bewirken eine Anhebung des Farbwiedergabeindex und - da sie überwiegend im kurzwelligen Teil des sichtbaren Spektralbereiches liegen - eine weitere Anhebung der ähnlichsten Farbtemperatur der Lampe.

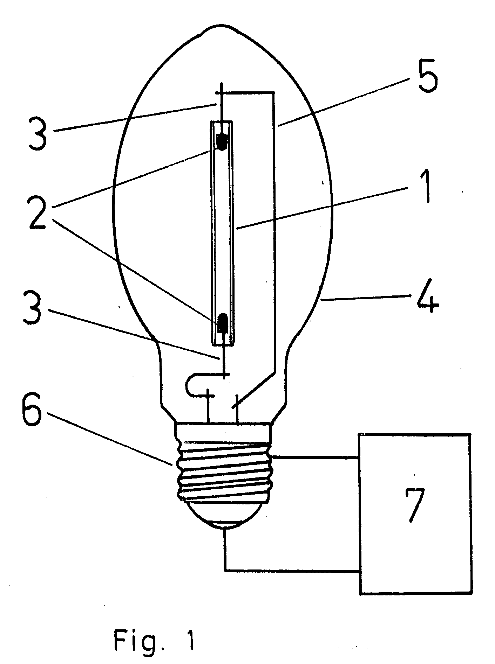

Die Erfindung soll nachstehend an drei Ausführungsbeispielen beschrieben werden, für die jeweils ein in Fig. 1 abgebildetes zylindrisches Entladungsrohr 1 aus durchscheinend gesintertem Aluminiumoxid mit einem Innendurchmesser von 3,5 mm mit zwei einander im Abstand von 36 mm gegenüberstehenden Elektroden 2 und mit vakuumdicht eingekitteten Stromzuführungen 3 benutzt wurde. Diese Entladungsgefäße sind von evakuierten Außenkolben 4 umgeben, wobei Gestellaufbauten 5 die mechanische Halterung und die elektrische Verbindung mit den Sockeln 6 übernehmen. Entladungsrohr, Gestellaufbau, Außenkolben und Sockel bilden zusammen eine Entladungslampe, die vom Stromversorgungsgerät 7 gespeist wird.

Zur Impulsformung werden mehrgliedrige Laufzeitketten, bestehend aus Induktivitäten und Kapazitäten, verwendet, die dem Entladungsplasma angepaßte Wellenwiderstände besitzen.

Beispiel 1

Das Entladungsgefäß ist mit 3 mg Natrium, 2 mg Quecksilber, 0,5 mg Caesium und 30 kPa Xenon gefüllt. Der Lampe werden pro Sekunde 1000 Stromimpulse mit einem Tastverhältnis von 0,05 und alternierender Polarität zugeführt. Diese Impulse werden einer Grundeinspeisung in Form eines 500 Hz-Rechteckwechselstromes von 0,1 A phasensynchron überlagert. Die so betriebene Lampe emittiert bei einer mittleren Leistungsaufnahme von 70 W einen Lichtstrom von 5,3 klm. Ihre Farbtemperatur beträgt 3600 K und ihr allgemeiner Farbwiedergabeindex 70.

Beispiel 2

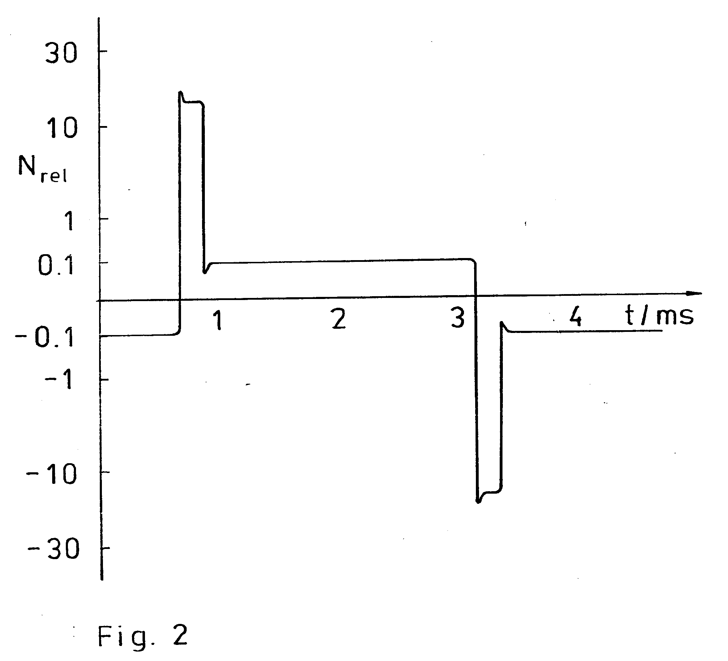

Das Entladungsgefäß ist mit 3,5 mg Natrium und 2 mg Quecksilber (XNa = 0,94) sowie Xenon mit einem Kaltfülldruck von 6 kPa gefüllt. Der Lampe werden pro Sekunde 400 Stromimpulse mit einem Tastverhältnis von 0,08 und alternierender Polarität zugeführt. Zur Impulsformung wird eine Laufzeitkette mit drei gleichen Gliedern aus Induktivitäten von je 68 µH und Kapazitäten von je 4 µF verwendet. Diese Impulse werden einer Grundeinspeisung in Form eines 200-Hz-Rechteckwechselstromes von 0,1 A phasensynchron überlagert. Fig. 2 zeigt den Verlauf der auf den Wert bei stationärem Betrieb bezogenen Lampenleistung $N_{rel}$ als Funktion der Zeit t. Die so mit leistungsstarken Impulsen betriebene Natriumdampf-Hochdrucklampe emittiert bei einer mittleren Leistungsaufnahme von 70 W einen Lichtstrom von 6 klm. Ihre Farbtemperatur beträgt 3200 K und ihr allgemeiner Farbwiedergabeindex hat den Wert 45.

Beispiel 3

Das Entladungsgefäß ist mit 2,4 mg Natrium (XNa = 1) sowie Xenon mit einem Kaltfülldruck von 30 kPa gefüllt. Der Lampe werden pro Sekunde 200 Stromimpulse mit einem Tastverhältnis von 0,02 und einheitlicher Polarität zugeführt. Zwischen den Impulsen wird eine Grundeinspeisung in Form eines Haltestromes mit einem Effektivwert von 0,1 A vorgenommen. Die so betriebene Lampe emittiert bei einer mittleren Leistungsaufnahme von 70 W einen Lichtstrom von 4,5 klm. Ihre Farbtemperatur beträgt 3500 K und ihr allgemeiner Farbwiedergabeindex hat den Wert 55.

**Patentansprüche**

1. Verfahren zum Betreiben einer Natriumdampf-Hochdrucklampe mit Natrium oder Natriumamalgam mit einem Natriummolenbruch XNa > 0,90 als Hauptentladungsmedium unter Verwendung einer Impulsfolgefrequenz (f) von mindestens 100 Hz;
   **gekennzeichnet durch**
   Anlegen der Impulse in einer Art und Weise, daß deren Leistung ($\hat{N}$) den gesamtzeitlichen Mittelwert ($\overline{N}$) mindestens um das Fünffache übersteigt,
   wobei das Tastverhältnis $\tau$ im Bereich $0,01 < \tau < 0,1$ bei alternierender Polarität und für Natriumamalgam mit einem Natriummolenbruch XNa > 0,95 ebenda auch bei einheitlicher Polarität liegt.

2. Verfahren nach Anspruch 1, dadurch gekennzeichnet, daß eine Impulsformung in drei Phasen erfolgt, wobei einem Übergang von der Abkühlungspause in den Zustand einer vorgegebenen Impulsleistung eine ausgedehnte Wirkungszeit dieser dann angepaßten Impulsleistung folgt, die von einer Rückführung in den Zustand der Abkühlungspause abgeschlossen wird, wobei eine annähernd rechteckige Impulsform verwendet wird.

3. Verfahren nach den Ansprüchen 1 oder 2, dadurch gekennzeichnet, daß zur Impulsformung eine aus Kondensatoren und Induktivitäten bestehende mehrgliedrige Laufzeitkette eingesetzt wird.

4. Verfahren nach einem der vorhergehenden Ansprüche, dadurch gekennzeichnet, daß das Entladungsmedium zusätzlich den Dampf der schweren Alkalimetalle Caesium und/oder Rubidium enthält.

5. Verfahren nach einem der Ansprüche 1 bis 3, dadurch gekennzeichnet, daß das Entladungsmedium zusätzlich den Dampf von Kadmium und/oder Zink enthält.

6. Verfahren nach Anspruch 1, dadurch gekennzeichnet, daß das Entladungsmedium zusätzlich Xenon oder ein anderes Edelgas enthält.

7. Verfahren nach Anspruch 1, dadurch gekennzeichnet, daß die Entladung in der Lampe während der Zeit zwischen den Impulsen durch einen Haltestrom aufrechterhalten wird.

**Claims**

1. Method of operating a high-pressure sodium vapour lamp with sodium or a sodium amalgam with a mole fraction of sodium ($X_{Na}$) greater than 0.90 as the main discharge medium, said method employing a pulse repetition frequency (f) of at least 100 Hz and being characterized by application of the pulses in a manner such that their power ($\hat{N}$) exceeds the total-time-averaged mean value ($\overline{N}$) by a factor of at least 5, with a pulse duty ratio $\tau$ in the range $0.01 < \tau < 0.1$ when pulses with alternating polarities are employed, and for sodium amalgams with mole fractions of sodium ($X_{Na}$) greater than 0.95, and exactly likewise when a uniform polarity is employed.

2. Method according to Claim 1, characterized in that a pulse-shaping regime comprising three phases is employed, a transition from the cooling pause to the condition corresponding to a predetermined pulse power being followed by an extended period during which this pulse power, then appropriately adjusted, is effective, and which is terminated by a return to the condition corresponding to the cooling pause, said pulse-shaping regime employing an approximately rectangular pulse shape.

3. Method according to Claim 1 or Claim 2, characterized in that a multi-element delay network is employed for pulse shaping, this network consisting of capacitors and inductances.

4. Method according to any one of the preceding Claims, characterized in that the discharge medium additionally contains the vapour of the heavy alkali metals caesium and/or rubidium.

5. Method according to any one of Claims 1 to 3, characterized in that the discharge medium additionally contains the vapour of cadmium and/or zinc.

6. Method according to Claim 1, characterized in that the discharge medium additionally contains xenon or another rare gas.

7. Method according to Claim 1, characterized in that during the time between the pulses, the discharge in the lamp is kept going by means of a sustaining current.

**Revendications**

1. Procédé d'exploitation d'une lampe à vapeur de sodium à haute pression contenant du sodium ou un amalgame de sodium avec une fraction molaire de sodium $X_{Na} > 0,90$ en tant que milieu de décharge principal, avec utilisation d'une fréquence de récurrence des impulsions (f) d'au moins 100 Hz,
caractérisé par le fait que
les impulsions sont appliquées de telle manière que leur puissance ($\hat{N}$) au moins cinq fois supérieure à la valeur moyenne dans le temps ($\overline{N}$),
le rapport cyclique $\tau$ étant situé dans la plage de $0,01 < \tau < 0,1$ en cas de polarité alternée et pour un amalgame de sodium avec une fraction molaire de sodium $X_{Na} > 0,95$ et également en cas de polarité unitaire.

2. Procédé suivant la revendication 1, caractérisé par le fait que la conformation des impulsions a lieu en trois phases, le passage de la phase de refroidissement à l'état d'une puissance d'impulsions prédéterminée étant suivi d'une durée d'action prolongée de cette puissance d'impulsions alors adaptée, suivie à son tour d'un retour à l'état de la pause de refroidissement, les impulsions utilisées ayant une forme sensiblement rectangulaire.

3. Procédé suivant les revendications 1 ou 2, caractérisé par le fait que pour la conformation des impulsions, on utilise une ligne à retard à plusieurs éléments composés de condensateurs et d'inductances.

4. Procédé suivant l'une des revendications précédentes, caractérisé par le fait que le milieu de décharge contient en plus la vapeur des métaux alcalino-terreux lourds césium et/ou rubidium.

5. Procédé suivant l'une des revendications 1 à 3, caractérisé par le fait que le milieu de décharge contient en plus la vapeur de cadmium et/ou zinc.

6. Procédé suivant la revendication 1, caractérisé par le fait que le mileu de décharge contient en plus du xénon ou un autre gaz rare.

7. Procédé suivant la revendication 1, caractérisé par le fait que la décharge dans la lampe est entretenue par un courant de maintien pendant les intervalles entre les impulsions.

Fig. 1

Fig. 2